# EUROPEAN PATENT APPLICATION

(11) **EP 4 769 278 A1**
(43) Date of publication of application: **01.07.2026**
(21) Application number: 25851858.8
(22) Date of filing: 21.07.2025
(51) Int. Cl.: G06Q 30/02, G06Q 50/10, G06N 3/088, G06F 16/9532, G06F 16/9538

(54) **ANALYSIS DEVICE AND METHOD THEREOF**

(30) Priority: 05.08.2024 KR 20240103734
(71) Applicant: LG Energy Solution, Ltd., Seoul 07335 (KR)
(72) Inventor: LIM, Young Jin, Daejeon 34122 (KR); JANG, Jin Woo, Daejeon 34122 (KR); KIM, Sung En, Daejeon 34122 (KR)
(74) Representative: Plasseraud IP
(86) International application number: PCT/KR2025/010717
(87) International publication number: WO 2026/034854

(57) **Abstract**

An analysis device according to an embodiment may include a memory configured to store at least one instruction and at least one processor configured to execute the at least one instruction, and the at least one processor may acquire text included in content retrieved on a specific site based on a specified search term, acquire, from a learning model, a first parameter indicating a state of an expected change in a market for the search term and a second parameter indicating a degree of the expected change in the market, based on inputting input data according to the acquired text into the learning model, and identify a market indicator indicating the expected change in the market according to the content based on the first parameter and the second parameter.

## Description

### TECHNICAL FIELD

### Cross-reference to Related Applications

This application claims priority from Korean Patent Application No. 10-2024-0103734, filed on August 5, 2024, the disclosure of which is incorporated by reference herein.

### Technical Field

Embodiments disclosed herein relate to an analysis device and a method thereof.

### BACKGROUND ART

As electric vehicles powered by electricity become widespread, competition among vehicle manufacturers in research and development is actively conducted. For example, an electric vehicle may be powered by a secondary battery, where the secondary battery is a rechargeable battery, including conventional Ni/Cd batteries, Ni/MH batteries, or the like, and recent lithium-ion batteries. Among secondary batteries, the lithium-ion battery has the advantage of having a much higher energy density than the existing Ni/Cd battery, Ni/MH battery, and the like. In addition, since the lithium-ion battery may be manufactured to be small and lightweight, the lithium-ion battery is used as a power source for mobile devices, and in recent years, its scope of use has expanded to include power sources for electric vehicles, so that the lithium-ion battery attracts attention as a next-generation energy storage medium.

Meanwhile, with the spread of video sharing platforms, the extent to which information is shared and spread through videos regarding electric vehicles is increasing. As the amount of information shared through videos increases and its accuracy improves, technologies that acquire information by analyzing videos is becoming increasingly important.

### DISCLOSURE OF THE INVENTION

### TECHNICAL PROBLEM

According to the embodiments disclosed herein, an analysis device and an analysis method for acquiring information by analyzing content are to be provided.

According to the embodiments disclosed herein, an analysis device and an analysis method for predicting market changes are to be provided.

According to the embodiments described herein, an analysis device and an analysis method for analyzing expected changes in company sales are to be provided.

According to the embodiments described herein, an analysis device and an analysis method for analyzing expected changes in the market through parameters acquired from a learning model are to be provided.

The technical problems of the present disclosure are not limited to those mentioned above, and other objectives not mentioned will be clearly understood by those skilled in the art from the following descriptions.

### TECHNICAL SOLUTION

An analysis device according to an embodiment of the present disclosure may include a memory configured to store at least one instruction and at least one processor configured to execute the at least one instruction.

According to an embodiment, the at least one processor may be configured to acquire text included in content retrieved on a specific site based on a specified search term, acquire, from a learning model, a first parameter indicating a state of an expected change in a market for the search term and a second parameter indicating a degree of the expected change in the market, based on inputting input data according to the acquired text into the learning model, and identify a market indicator indicating the expected change in the market according to the content based on the first parameter and the second parameter.

According to an embodiment, the at least one processor may be configured to identify a market indicator at a first point in time as a first partial market indicator by acquiring, based on the search term, content items within a specified ranking among content items retrieved on the specific site at the first point in time and text included in the content items within the specified ranking, identify a market indicator at a second point in time as a second partial market indicator by acquiring, based on the search term, content items within a specified ranking among content items retrieved on the specific site at the second point in time and text included in the content items within the specified ranking, and identify the market indicator for a period including the first point in time and the second point in time based on the first partial market indicator and the second partial market indicator.

According to an embodiment, the first parameter may indicate a state of an expected change in a product's sales for the search term for a specified period, the second parameter may indicate a degree of the expected change in the product's sales for the specified period, and the market indicator may indicate the expected change in the product's sales for the specified period.

According to an embodiment, the first parameter may correspond to a value greater than 0 when the product's sales are expected to increase for the specified period and correspond to a value less than 0 when the product's sales are expected to decrease for the specified period.

According to an embodiment, the at least one processor may acquire, from the learning model, a reason why the first parameter and the second parameter are identified, along with the first parameter and the second parameter, based on inputting input data according to the acquired text into the learning model.

According to an embodiment, the at least one processor may be configured to perform a processing operation of deleting text representing a sound included in the content in the acquired text, identify whether the processed text is associated with the search term, based on inputting data according to the processed text into the learning model, and generate the input data according to the processed text based on the processed text being associated with the search term.

According to an embodiment, the search term may represent a specific company.

According to an embodiment, the text may include a subtitle included in the content.

An analysis method according to another embodiment of the present disclosure may include acquiring text included in content retrieved on a specific site based on a specified search term, acquiring, from a learning model, a first parameter indicating a state of an expected change in a market for the search term and a second parameter indicating a degree of the expected change in the market, based on inputting input data according to the acquired text into the learning model, and identifying a market indicator indicating the expected change in the market according to the content based on the first parameter and the second parameter.

According to an embodiment, the identifying of the market indicator indicating the expected change in the market according to the content based on the first parameter and the second parameter may include identifying a market indicator at a first point in time as a first partial market indicator by acquiring, based on the search term, content items within a specified ranking among content items retrieved on the specific site at the first point in time and text included in the content items within the specified ranking, identifying a market indicator at a second point in time as a second partial market indicator by acquiring, based on the search term, content items within a specified ranking among content items retrieved on the specific site at the second point in time and text included in the content items within the specified ranking, and identifying the market indicator for a period including the first point in time and the second point in time based on the first partial market indicator and the second partial market indicator.

According to an embodiment, the first parameter may indicate a state of an expected change in a product's sales for the search term for a specified period, the second parameter may indicate a degree of the expected change in the product's sales for the specified period, and the market indicator may indicate the expected change in the product's sales for the specified period.

According to an embodiment, the first parameter may correspond to a value greater than 0 when the sales volume of the product for the specified period is expected to increase, and may correspond to a smaller value when the sales volume of the product for the specified period is expected to decrease.

According to an embodiment, the analysis method may further include acquiring, from the learning model, a reason why the first parameter and the second parameter are identified, along with the first parameter and the second parameter, based on inputting input data according to the acquired text into the learning model.

According to an embodiment, the analysis method may further include performing a processing operation of deleting text representing a sound included in the content in the acquired text, identifying whether the processed text is associated with the search term, based on inputting data according to the processed text into the learning model, and generating the input data according to the processed text based on the processed text being associated with the search term.

According to an embodiment, the search term may represent a specific company.

According to an embodiment, the text may include a subtitle included in the content.

### ADVANTAGEOUS EFFECTS

The present technology can acquire information by analyzing content.

In addition, the present technology can predict changes in the market.

In addition, the present technology can analyze expected changes in company sales participating in the market.

In addition, the present technology can analyze expected changes in the market through parameters acquired from a learning model.

Besides, various effects may be provided that are directly or indirectly identified through the present disclosure.

### BRIEF DESCRIPTION OF THE DRAWINGS

FIG. 1 is a block diagram illustrating a configuration of an analysis device, in an analysis device and an analysis method according to an embodiment of the present disclosure.
FIG. 2 illustrates an example of a flow of operations for identifying a market indicator of the analysis device, in the analysis device and the analysis method according to an embodiment of the present disclosure.
FIG. 3 illustrates an example of a graph representing an output frequency of influence scores constituting a market indicator for a specific period, in the analysis device and the analysis method according to an embodiment of the present disclosure.
FIG. 4 illustrates an example of a graph representing the output frequency of influence scores constituting the market indicator for each period, in the analysis device and the analysis method according to an embodiment of the present disclosure.
FIG. 5 illustrates an example of a flow of operations for identifying a market indicator of the analysis device, in the analysis device and the analysis method according to an embodiment of the present disclosure.
FIG. 6 is a block diagram illustrating a hardware configuration of a computing system that performs an analysis method, in the analysis device and the analysis method according to an embodiment of the present disclosure.

### MODE FOR CARRYING OUT THE INVENTION

Below, some embodiments disclosed herein are described with reference to the accompanying drawings of various embodiments of the present disclosure. However, this is not intended to limit the present technology to the specific embodiments, and it is to be construed to include various modifications, equivalents, and/or alternatives of embodiments of the present technology.

In adding reference numerals to the components of each drawing, it should be noted that the same components are given the same reference numerals as much as possible even though they are shown on different drawings. In addition, in describing various embodiments disclosed herein, when a detailed description of a related known configuration or function is determined to hinder understanding of the embodiments of the present invention, the detailed description thereof is omitted. It is to be understood that a singular form of a noun corresponding to an item may include one or more of the things, unless the relevant context clearly indicates otherwise.

In addition, in describing a component of the embodiments of the present disclosure, terms such as first, second, A, B, (a), (b), etc. may be used. These terms are only for distinguishing the component from other components, and the essence, sequence, or order of the component may not be limited by the terms. In addition, unless otherwise defined, all terms used herein, including technical or scientific terms, have the same meaning as commonly understood by those of ordinary skill in the art to which the embodiments disclosed herein belong. Terms, such as those defined in commonly used dictionaries, should be interpreted as having a meaning that is consistent with their meaning in the context of the related art and will not be interpreted in an idealized or overly formal sense unless expressly so defined herein.

In addition, in the present disclosure, in order to determine whether a specific condition is satisfied or fulfilled, expressions "more than" or "less than" may be used, but this is only a description for expressing an example and does not exclude descriptions of "equal to or more than" or "less than or equal to." A condition described as "equal to or more than" may be replaced with "more than," a condition described as "less than or equal to" may be replaced with "less than," and a condition described as "equal to or more than and less than" may be replaced with "more than and less than or equal to." In addition, hereinafter, "A to B" mean at least one of the elements from A (inclusive of A) to B (inclusive of B).

In the present disclosure, each of phrases such as "A or B," "at least one of A and B," "at least one of A or B," "A, B or C," "at least one of A, B and C," or "at least one of A, B, or C," may include any one of the items listed in the phrase, or all possible combinations of the phrases.

In the present specification, It is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or via a third element.

According to one embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the described components may include a single entity or multiple entities, and some of the plurality of entities may be disposed separately from other components. According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

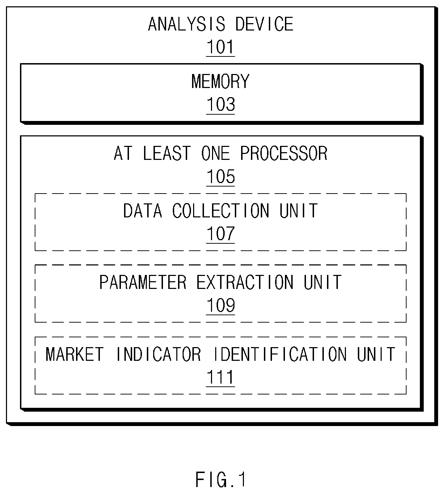

Hereinafter, embodiments of the present disclosure will be described in detail with reference to FIGS. 1 to 6.

FIG. 1 is a block diagram illustrating a configuration of an analysis device, in an analysis device and an analysis method according to an embodiment of the present disclosure.

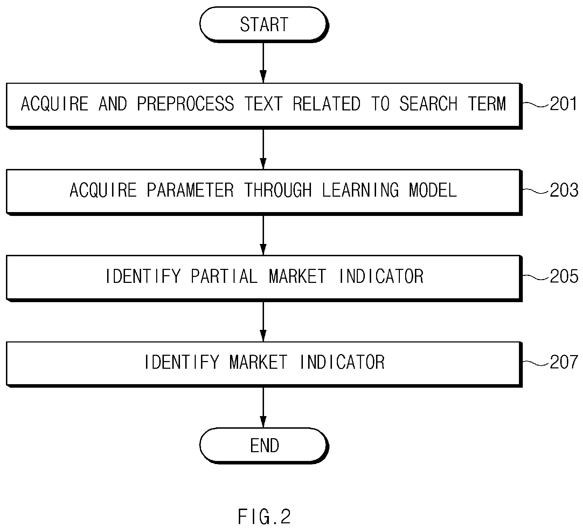

FIG. 2 illustrates an example of a flow of operations for identifying a market indicator of the analysis device, in the analysis device and the analysis method according to an embodiment of the present disclosure.

Referring to FIGS. 1 and 2, an analysis device 101 may include a memory 103 and at least one processor 105.

At least one processor 105 may include a data collection unit 107, a parameter extraction unit 109, and a market indicator identification unit 111. The memory 103 may include at least one instruction. At least one processor 105 may execute the at least one instruction.

According to an embodiment, at least one processor 105 of the analysis device 101 may acquire information (e.g., expected changes in the market) by analyzing content (e.g., video) acquired based on a search term.

According to an embodiment, at least one processor 105 of the analysis device 101 may identify a market indicator representing the expected changes in the market (e.g., expected sales changes of a specific company) related to a product for a specified search term (e.g., a name of a specific company) based on search results from a specific site (e.g., a video sharing platform) based on the specified search term.

In first operation 201, at least one processor 105 of the analysis device 101 according to an embodiment may perform text acquisition and preprocessing related to a search term at a specific point in time. In other words, in order to identify consumers' perception of search terms on a specific site, at least one processor 105 of the analysis device 101 according to an embodiment may acquire text included in each content item retrieved on the specific site based on a specified search term through the data collection unit 107 and perform a preprocessing operation on the text.

For example, at a specific point in time, at least one processor 105 of the analysis device 101 may acquire content items within a specified ranking (e.g., about 10th) among content items retrieved on a specific site based on a search term. The ranking of content items may be determined based on a search result. Since the ranking of content items may change according to sorting criteria, a sorting criterion for acquiring content while identifying market indicators may be determined by specified one of several criteria (e.g., by number of views, by recency, by upload date, by rating).

For example, text included in content may include subtitles included in the content. For example, subtitles included in content may include subtitles provided by a content publisher or subtitles generated through a learning model.

For example, at least one processor 105 of the analysis device 101 may perform a processing operation of deleting text representing sounds included in the content (e.g., music and background music (BGM)) in the acquired text. That is, according to various embodiments, at least one processor 105 may not use text representing sounds when identifying market indicators.

For example, at least one processor 105 of the analysis device 101 may identify whether the processed text is associated with the search term based on inputting data (e.g., input data) according to the processed text into the learning model.

For example, while inputting data according to the processed text into the learning model, at least one processor 105 of the analysis device 101 may input, into the learning model, a command requesting the learning model to identify whether the data according to processed text is associated with the search term (e.g., read the data, and when the data is related to the search term, indicate only "yes"; when the data is not related to the search term, indicate only "no"). The learning model may output a result indicating whether the data according to the processed text is associated with the search term (e.g., associated, not associated).

For example, at least one processor 105 of the analysis device 101 may generate input data to be input into the learning model for identifying a market indicator at a specific point in time according to the processed text, when the processed text is associated with the search term.

For example, at least one processor 105 of the analysis device 101 according to an embodiment may perform an additional preprocessing operation (e.g., removing blank spaces based on strings in the processed text) to increase the text identification of the learning model when the processed text is associated with the search term. However, the embodiment of the present disclosure may not be limited thereto.

For example, at least one processor 105 of the analysis device 101 may generate the input data based on content other than the retrieved content when the processed text is not associated with the search term.

At least one processor 105 of the analysis device 101 may identify a case where the content is not associated with the search term by identifying whether the processed text is associated with the search term. At least one processor 105 of the analysis device 101 may exclude text according to the content that is not associated with the search term in the process of identifying the market indicator when the content is not associated with the search term.

According to an embodiment, the learning model may be stored in a server different from the analysis device 101.

According to an embodiment, the learning model may include a large language model (LLM). The LLM may represent a natural language processing model trained based on a large text dataset.

According to an embodiment, examples of the learning algorithm for training the learning model may include supervised learning, unsupervised learning, semi-supervised learning, or reinforcement learning.

However, the LLM mainly may use unsupervised learning to identify patterns and structures in text, and perform language-related tasks such as text generation, context understanding, translation, and summarization based on the identified patterns and structures.

According to an embodiment, the learning model may include a deep neural network (DNN). Examples of the deep neural network include a convolutional neural network (CNN), a deep neural network (DNN), a recurrent neural network (RNN), a restricted boltzmann machine (RBM), a deep belief network (DBN), a bidirectional recurrent deep neural network (BRDNN), deep Q-networks, or the like, but the embodiment of the present disclosure is not limited to the above examples.

In second operation 203, at least one processor 105 of the analysis device 101 according to an embodiment may acquire parameters (e.g., a first parameter and a second parameter) through the learning model through the parameter extraction unit 109. The first parameter may include an indicator indicating a state of an expected change in the market for the search term. The second parameter may include an indicator indicating a degree of expected change in the market.

According to an embodiment, at least one processor 105 of the analysis device 101 may input input data and a command requesting a parameter into the learning model to acquire parameters (e.g., the first parameter and the second parameter) for each content item.

For example, a command requesting the first parameter may include at least one of a command indicating the status of the learning model (e.g., "you are a world-class electric vehicle market expert"), a command requesting output of the state of the expected change in the market (e.g., "based on the input data, tell me whether the expected change in a product's sales for a search term for a specified period will increase, decrease, or be neutral), or a combination thereof.

For example, a command requesting the second parameter may include at least one of a command indicating the status of the learning model (e.g., "you are a world-class electric vehicle market expert"), a command requesting output of the degree of expected change in the market (e.g., "based on the input data, represent the degree of expected change in the product's sales for the search term for a specified period as an integer between 1 and 5. Represent the integer so that the larger the integer, the greater the degree of the expected change"), a command requesting a reason why the second parameter is identified (e.g., "based on the input data, output the reason why the expected change in the market for the search term is represented by the first parameter and the second parameter), or a combination thereof.

According to an embodiment, at least one processor 105 of the analysis device 101 may include a command requesting output of a reason why the first parameter or the second parameter is identified (e.g., "based on the input data, output a reason why an expected change in the market for the search term is represented by the first parameter and the second parameter).

In third operation 205, at least one processor 105 of the analysis device 101 according to an embodiment may identify a partial market indicator through the market indicator identification unit 111.

For example, at least one processor 105 of the analysis device 101 may identify an influence score on the content item based on a value obtained by multiplying a value corresponding to the first parameter by the second parameter, for each of content items included in a specified ranking (e.g., about 10th) among content items retrieved on a specific site based on a search term at a specific point in time. The influence score may include a number that represents the expected change in the market based on the content. The influence scores (e.g., -5, -4, -3, -2, -1, 0, 1, 2, 3, 4, 5) may be identified based on the value obtained by multiplying the value corresponding to the first parameter (e.g., -1, 0, or 1) and the second parameter (e.g., 1, 2, 3, 4, or 5).

For example, at least one processor 105 of the analysis device 101 may identify a partial market indicator at a specific point in time based on a sum of the influence scores of each of content items included in a specified ranking at the specific point in time. The partial market indicator may include an indicator that represents the expected change in the market based on content items retrieved on a specific site at a specific point in time.

For example, at least one processor 105 of the analysis device 101 may set the first parameter to a value greater than 0 (e.g., +1) when a product's sales are expected to increase for a specified period. At least one processor 105 of the analysis device 101 may set the first parameter to a value less than 0 (e.g., -1) when the product's sales are expected to decrease for the specified period. At least one processor 105 of the analysis device 101 may set the first parameter to 0 when it is expected that there will be no change in the product's sales for the specified period.

In fourth operation 207, at least one processor 105 of the analysis device 101 according to an embodiment may identify a market indicator through the market indicator identification unit 111.

According to an embodiment, at least one processor 105 of the analysis device 101 may identify a partial market indicator at a specific point in time and a partial market indicator at a point in time different from the specific point in time, and identify the market indicator for a period including the specific point in time and the different point in time based on the partial market indicator at the specific point in time and the partial market indicator at the different point in time.

For example, at least one processor 105 of the analysis device 101 may identify a first partial market indicator based on content items posted on a specific site for a period (e.g., the first week of August) including a specific point in time (e.g., the first Sunday of August), identify a second partial market indicator based on content items posted on the specific site for a period (e.g., the second week of August) including another point in time (e.g., the second Sunday of August), identify a third partial market indicator based on content items posted on the specific site for a period (e.g., the third week of August) including still another point in time (e.g., the third Sunday of August), and identify a fourth partial market indicator based on content items posted on the specific site for a period (e.g., the fourth week of August) including yet still another point in time (e.g., the fourth Sunday of August), which is different from the aforementioned points in time.

For example, at least one processor 105 of the analysis device 101 may identify the market indicator for the period (e.g., the month of August) including a specific point in time, another point in time, still another point in time, and yet still another point in time, which is different from the aforementioned points in time, based on a sum of the first partial market indicator, the second partial market indicator, the third partial market indicator, and the fourth partial market indicator.

According to an embodiment, at least one processor 105 of the analysis device 101 may provide the identified market indicator and the reason why the first parameter and the second parameter are identified for each content item to a user.

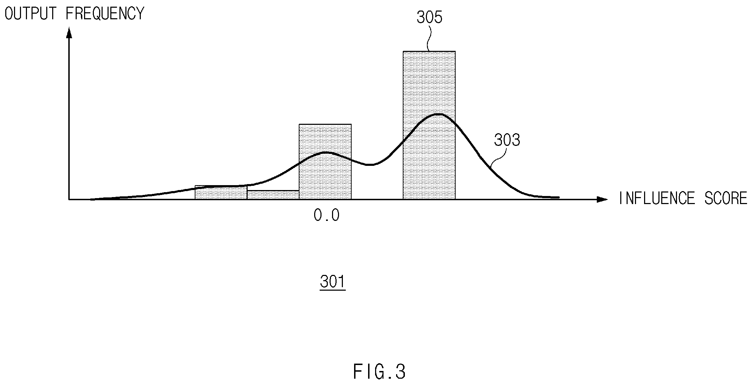

FIG. 3 illustrates an example of a graph representing an output frequency of influence scores constituting a market indicator for a specific period, in the analysis device and the analysis method according to an embodiment of the present disclosure.

Referring to FIG. 3, a graph 301 may represent the output frequency based on the influence scores for content retrieved at points in time included in a specific period (e.g., the month of August). A bar 305 may represent a frequency at which an influence score is output at a point in time included in the specific period. Each of output frequencies may be normalized so that the sum of the frequencies at which the influence scores are output is 1. A line 303 may represent the distribution of estimated output frequencies as a curve based on the distribution of the bars 305. For example, the line 303 may represent a probability density function of the output frequency estimated using a kernel density estimation (KDE) plot method.

According to an embodiment, at least one processor 105 of the analysis device 101 may identify the market indicator based on an average value of the influence scores of each of content items retrieved at points in time included in a specific period (e.g., the first week of August, the second week of August, the third week of August, the fourth week of August). However, since the market indicator is an average of the influence scores, it may be difficult to examine the distribution of the influence scores. Therefore, at least one processor 105 of the analysis device 101 may provide the graph 301 representing output frequency based on the influence score to the user.

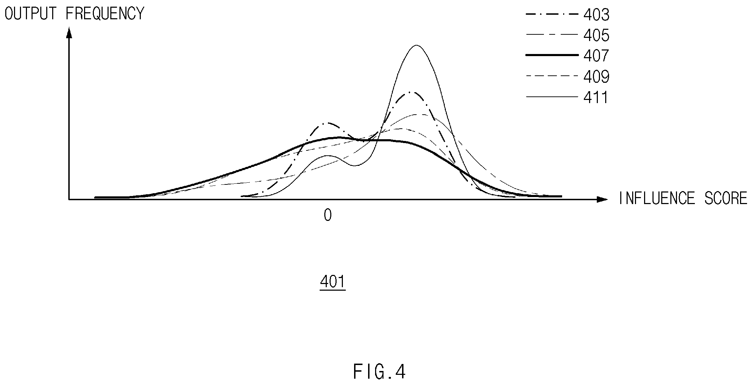

FIG. 4 illustrates an example of a graph representing the output frequency of influence scores constituting the market indicator for each period, in the analysis device and the analysis method according to an embodiment of the present disclosure.

Referring to FIG. 4, a first line 403 may represent the output frequency according to an influence score at a point in time included in a first period (e.g., the first week of March). A second line 405 may represent the output frequency according to an influence score at a point in time included in a second period (e.g., the second week of March). A third line 407 may represent the output frequency according to an influence score at a point in time included in a third period (e.g., the third week of March). A fourth line 409 may represent the output frequency according to an influence score at a point in time included in a fourth period (e.g., the fourth week of March). A fifth line 411 may represent the output frequency according to an influence score at a point in time included in a fifth period (e.g., the fifth week of March).

According to an embodiment, at least one processor 105 of the analysis device 101 may provide the graph 401 representing the output frequency of influence scores according to the periods to the user.

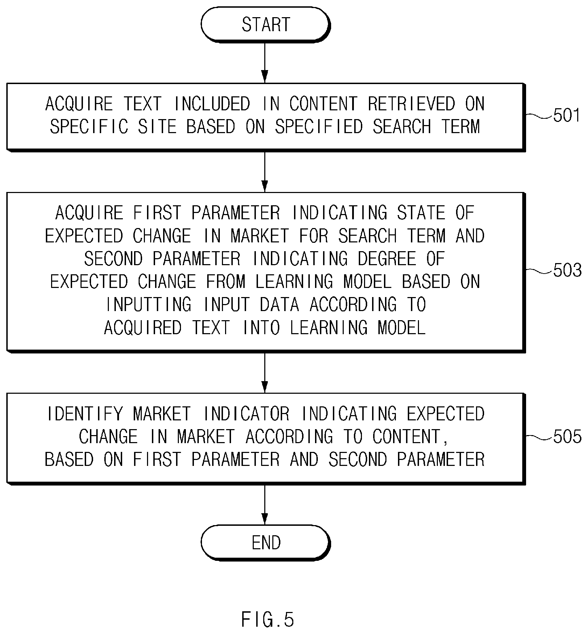

FIG. 5 illustrates an example of a flow of operations for identifying a market indicator of the analysis device, in the analysis device and the analysis method according to an embodiment of the present disclosure.

Referring to FIG. 5, in first operation 501, at least one processor 105 of the analysis device 101 according to an embodiment may acquire text included in content retrieved on a specific site based on a specified search term.

In second operation 503, at least one processor 105 of the analysis device 101 according to an embodiment may acquire a first parameter indicating a state of an expected change in the market for the search term and a second parameter indicating a degree of the expected change from the learning model based on inputting input data according to the acquired text into the learning model.

In third operation 505, at least one processor 105 of the analysis device 101 according to an embodiment may identify a market indicator indicating the expected change in the market according to the content, based on the first parameter and the second parameter.

According to an embodiment, at least one processor 105 of the analysis device 101 may provide the market indicator to the user through an application of the analysis device 101 for analyzing the market.

For example, at least one processor 105 of the analysis device 101 may provide the market indicator to the user by outputting the market indicator to a display included in the analysis device 101.

For example, at least one processor 105 of the analysis device 101 may generate a graph (e.g., a graph of output frequency according to influence scores) regarding market prediction based on the market indicator.

For example, at least one processor 105 of the analysis device 101 may provide, to the user, at least one of the market indicator, the reason why the market indicator is output (e.g., the reason why the first parameter and the second parameter are output), a graph regarding market prediction (e.g., a graph of output frequency according to influence scores), or a combination thereof, based on the market indicator.

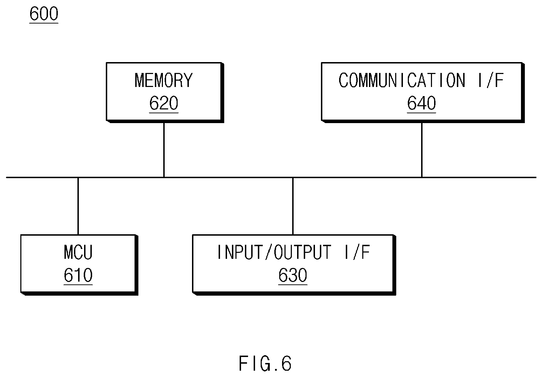

FIG. 6 is a block diagram illustrating a hardware configuration of a computing system that performs an analysis method, in the analysis device and the analysis method according to an embodiment of the present disclosure.

Referring to FIG. 6, a computing system 600 according to an embodiment disclosed herein may include a microcontroller unit (MCU) 610, a memory 620, an input/output interface (I/F) 630, and a communication I/F 640.

The MCU 610 may be at least one processor that executes various programs (e.g., a battery cell data collection program, a graph generation program, a data analysis program, a data decomposition algorithm, a normalization program, a battery cell diagnosis program, and the like) stored in the memory 620, processes various pieces of information including battery cell characteristic data, latent variables, and the like through the programs, and performs functions of the analysis device 101 shown in the above-described FIGS. 1 to 5.

The memory 620 may store various programs such as the battery cell data collection program, the graph generation program, the data analysis program, the data decomposition algorithm, the normalization program, the battery cell diagnosis program, and the like.

A plurality of memories 620 may be provided as needed. The memory 620 may be a volatile memory or a non-volatile memory. As the volatile memory for the memory 620, a random-access memory (RAM), a dynamic RAM (DRAM), a static RAM (SRAM), or the like may be used. As the non-volatile memory for the memory 620, a read-only memory (ROM), a programmable ROM (PROM), an electrically alterable ROM (EAROM), an erasable programmable ROM (EPROM), an electrically erasable programmable ROM (EEPROM,) a flash memory, or the like may be used. The examples of memories 620 listed above are only exemplary and are not limited to the examples.

The input/output I/F 630 may provide an interface that connects an input device (not shown) such as a keyboard, a mouse, a touch panel, or the like, and an output device such as a display (not shown), to the MCU 610 to enable data transmission and reception.

The communication I/F 640 is a component that may transmit and receive various data to and from the server, and may be any device that may support wired or wireless communication. For example, the analysis device 101 may transmit and receive various types of information, including a shape model of a battery cell or the like, to and from a separately provided external server through the communication I/F 640.

By being recorded in the memory 620 and processed by the MCU 610 in this way, a computer program according to an embodiment disclosed herein may be implemented, for example, as a module that performs each of the functions shown in FIG. 2.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The foregoing disclosure outlines features of several embodiments so that those skilled in the art may better understand the aspects of the present disclosure. Those skilled in the art will appreciate that the present disclosure may readily serve as a basis for designing or modifying other structures for carrying out the same purposes or achieving the same advantages of the embodiments introduced herein. Furthermore, those skilled in the art will recognize that such equivalent configurations do not depart from the scope of the present disclosure, and that various changes, substitutions, and modifications may be made herein without departing from the scope of the present disclosure.

## Claims

1. An analysis device comprising:
a memory configured to store at least one instruction; and
at least one processor configured to execute the at least one instruction,
wherein the at least one processor is configured to:
acquire text included in content retrieved on a specific site based on a specified search term;
acquire, from a learning model, a first parameter indicating a state of an expected change in a market for the search term and a second parameter indicating a degree of the expected change in the market, based on inputting input data according to the acquired text into the learning model; and
identify a market indicator indicating the expected change in the market according to the content based on the first parameter and the second parameter.

2. The analysis device of claim 1, wherein the at least one processor is configured to:
identify a market indicator at a first point in time as a first partial market indicator by acquiring, based on the search term, content items within a specified ranking among content items retrieved on the specific site at the first point in time and text included in the content items within the specified ranking;
identify a market indicator at a second point in time as a second partial market indicator by acquiring, based on the search term, content items within a specified ranking among content items retrieved on the specific site at the second point in time and text included in the content items within the specified ranking; and
identify the market indicator for a period including the first point in time and the second point in time based on the first partial market indicator and the second partial market indicator.

3. The analysis device of claim 1, wherein the first parameter is configured to indicate a state of an expected change in a product's sales for the search term for a specified period,
the second parameter is configured to indicate a degree of the expected change in the product's sales for the specified period, and
the market indicator is configured to indicate the expected change in the product's sales for the specified period.

4. The analysis device of claim 3, wherein the first parameter corresponds to a value greater than 0 when the product's sales are expected to increase for the specified period, and corresponds to a value less than 0 when the product's sales are expected to decrease for the specified period.

5. The analysis device of claim 1, wherein the at least one processor is configured to acquire, from the learning model, a reason why the first parameter and the second parameter are identified, along with the first parameter and the second parameter, based on inputting input data according to the acquired text into the learning model.

6. The analysis device of claim 1, wherein the at least one processor is configured to:
perform a processing operation of deleting text representing a sound included in the content in the acquired text;
identify whether the processed text is associated with the search term, based on inputting data according to the processed text into the learning model; and
generate the input data according to the processed text based on the processed text being associated with the search term.

7. The analysis device of claim 1, wherein the search term represents a specific company.

8. The analysis device of claim 1, wherein the text includes a subtitle included in the content.

9. An analysis method comprising:
acquiring text included in content retrieved on a specific site based on a specified search term;
acquiring, from a learning model, a first parameter indicating a state of an expected change in a market for the search term and a second parameter indicating a degree of the expected change in the market, based on inputting input data according to the acquired text into the learning model; and
identifying a market indicator indicating the expected change in the market according to the content based on the first parameter and the second parameter.

10. The analysis method of claim 9, wherein the identifying the market indicator indicating the expected change in the market according to the content based on the first parameter and the second parameter includes:
identifying a market indicator at a first point in time as a first partial market indicator by acquiring, based on the search term, content items within a specified ranking among content items retrieved on the specific site at the first point in time and text included in the content items within the specified ranking;
identifying a market indicator at a second point in time as a second partial market indicator by acquiring, based on the search term, content items within a specified ranking among content items retrieved on the specific site at the second point in time and text included in the content items within the specified ranking; and
identifying the market indicator for a period including the first point in time and the second point in time based on the first partial market indicator and the second partial market indicator.

11. The analysis method of claim 9, wherein the first parameter indicates a state of an expected change in a product's sales for the search term for a specified period,
the second parameter indicates a degree of the expected change in the product's sales for the specified period, and
the market indicator represents the expected change in the product's sales for the specified period.

12. The analysis method of claim 11, wherein the first parameter corresponds to a value greater than 0 when the product's sales are expected to increase for the specified period, and corresponds to a value less than 0 when the product's sales are expected to decrease for the specified period.

13. The analysis method of claim 9, further comprising acquiring, from the learning model, a reason why the first parameter and the second parameter are identified, along with the first parameter and the second parameter, based on inputting input data according to the acquired text into the learning model.

14. The analysis method of claim 9, further comprising:
performing a processing operation of deleting text representing a sound included in the content in the acquired text;
identifying whether the processed text is associated with the search term, based on inputting data according to the processed text into the learning model; and
generating the input data according to the processed text based on the processed text being associated with the search term.

15. The analysis method of claim 9, wherein the search term represents a specific company.

16. The analysis method of claim 9, wherein the text includes a subtitle included in the content.
